# EUROPEAN PATENT APPLICATION

(11) **EP 4 361 997 A1**
(43) Date of publication of application: **01.05.2024**
(21) Application number: 22204520.5
(22) Date of filing: 28.10.2022
(51) Int. Cl.: G08G 1/16, B60W 30/095

(54) **METHOD FOR CONTROLLING A VEHICLE, DATA PROCESSING APPARATUS, VEHICLE, COMPUTER PROGRAM, AND COMPUTER-READABLE STORAGE MEDIUM**

(71) Applicant: Volvo Car Corporation, 405 31 Göteborg (SE)
(72) Inventor: PEREZ BARRERA, Oswaldo, 40531 Göteborg (SE); LENNARTSSON, Anders, 40531 Göteborg (SE)
(74) Representative: Maiwald GmbH

(57) **Abstract**

The disclosure relates to a method for controlling a vehicle (10). The vehicle (10) shares a traffic infrastructure (I) with a cyclist (28). The method comprises detecting the cyclist (28) and a location (L) of the cyclist (28). Subsequently, based on a body pose of the cyclist (28) and a map information, a cyclist path (30) is estimated along which the cyclist (28) is expected to be travelling. Moreover, the method comprises determining whether the vehicle path (P) and the cyclist path (30) interfere with one another. A location (34, 36) of interference of the vehicle path (P) and the cyclist path (30) is determined respectively if the vehicle path (P) and the cyclist path (30) interfere with one another. Additionally, an interference risk describing whether the vehicle (10) and the cyclist (28) risk to interfere with one another at the location (34, 36) of interference is determined and a reaction manoeuver is triggered. Furthermore, a corresponding data processing apparatus is presented. Also, a vehicle (10) comprising such a data processing apparatus is explained. Additionally, a computer program and a computer-readable storage medium are shown.

## Description

The present disclosure relates to a method for controlling a vehicle. The vehicle is travelling along a known vehicle path and shares a traffic infrastructure with a cyclist.

The present disclosure is also directed to a data processing apparatus comprising means for carrying out such a method.

Moreover, the present disclosure relates to a vehicle comprising such a data processing apparatus.

Additionally, the present disclosure relates to a computer program and a computer-readable storage medium.

In the present context, the traffic infrastructure is to be understood as the network of roads and pathways on which the vehicle and the cyclist can travel. The cyclist is to be understood as the combination of a bicycle and a human riding the bicycle.

When vehicles and cyclists share traffic infrastructure, accidents between vehicles and cyclists are to be avoided. This is especially the case since cyclists are much more vulnerable as compared to vehicles.

In a case in which the vehicle is operated by a human driver, it is the human driver's responsibility to see the cyclist and maneuver the vehicle such that no accident occurs.

In a case in which the vehicle is a fully or partly autonomous vehicle, a computer-implemented method for controlling the vehicle has the task to avoid accidents.

It is an objective of the present disclosure to provide a method for controlling a vehicle, especially a fully or partly autonomous vehicle. Using this method shall allow the vehicle and the cyclist to share the traffic infrastructure in a safe manner.

The problem is at least partially solved or alleviated by the subject matter of the independent claims of the present disclosure, wherein further examples are incorporated in the dependent claims.
SE:TOP

According to a first aspect, there is provided a method for controlling a vehicle. The vehicle is travelling along a known vehicle path and shares a traffic infrastructure with a cyclist. The method comprises:
- detecting the cyclist based on at least one image received from an environment detection unit of the vehicle,
- determining a location of the cyclist,
- estimating a cyclist path along which the cyclist is expected to be travelling based on a body pose of the cyclist and a map information describing at least a part of the traffic infrastructure,
- determining whether the vehicle path and the cyclist path interfere with one another and determining a location of interference of the vehicle path and the cyclist path respectively if the vehicle path and the cyclist path interfere with one another,
- determining an interference risk describing whether the vehicle and the cyclist risk to interfere with one another at the respective location of interference, if the vehicle path and the cyclist path interfere with one another, and
- triggering a reaction manoeuver of the vehicle, if an interference risk is determined.

Thus, the location of the cyclist may be determined based on the detection result of the environment detection unit. The location of the cyclist may be determined relative to a location of the vehicle. Also the body pose of the cyclist may be determined based on the detection result of the environment detection unit, i.e. the at least one image. In order to detect the body pose, known algorithms may be used, for example a deformable part model or an extended Kalman filter algorithm may be used. In a simplified manner, the map information may be imagined as a map of the shared traffic infrastructure. Consequently, by evaluating the body pose together with the map information, it is possible to estimate the cyclist path, i.e. a path that the cyclist is expected to be traveling within the traffic infrastructure. The vehicle path is known. Based on this information, it may be determined whether the vehicle path and the cyclist path interfere with one another. This means that it is determined whether the vehicle path and the cyclist path cross each other or have a minimal distance being smaller than a predefined distance threshold. In other words, it is determined whether the vehicle path and the cyclist path are at least partially closer to each other than the predefined distance threshold which may describe a safety distance. The method is only continued, if the vehicle path and the cyclist path are found to interfere. Otherwise, the method is abandoned. Subsequently, an interference risk of the vehicle and the cyclist may be determined. It is noted that an interference of the vehicle and the cyclist is different from an interference of the vehicle path and the cyclist path. In an illustrative example, the vehicle path and the cyclist path are crossing each other or have portions which are arranged very close to each other. Thus, the vehicle path and the cyclist path interfere with one another. However, if the vehicle travels along the vehicle path long before the cyclist travels along the cyclist path, the vehicle and the cyclist do not risk to interfere with one another. Also in the context of the evaluation of an interference risk, the method is only continued if an interference risk is determined to be present. Otherwise, the method is abandoned. Altogether, a risk of interference between the vehicle and the cyclist may be determined with high reliability. Consequently, an appropriate reaction maneuver of the vehicle may be triggered such that accidents or undesired interferences are avoided.

The vehicle may be a fully or partially autonomous vehicle.

The environment detection unit of the vehicle may comprise an optical camera unit and may be configured to detect the cyclist. More generally speaking, computer vision is used in order to detect the cyclist.

It is noted that the method according to the present disclosure may be performed independent from the fact whether the cyclist is approaching the vehicle or is traveling in the same direction as the vehicle.

In an example, determining whether the vehicle path and the cyclist path interfere with one another comprises determining a minimal path distance between the vehicle path and the cyclist path and comparing the minimal path distance to a minimal path distance threshold. The locations of interference of the vehicle path and the cyclist path respectively are located at the minimal path distance. It is noted that the minimal path distance is a geometric distance, i.e. a geometric length. In a case in which the vehicle path and the cyclist path cross or overlap each other, the minimal path distance is zero. Consequently, the determination whether the vehicle path and the cyclist path interfere with one another may be performed in a simple and reliable manner.

In an example, determining an interference risk comprises determining a minimal traveler offset between the vehicle and the cyclist occurring while the vehicle is travelling along the vehicle path and the cyclist is travelling along the cyclist path. Additionally, the minimal traveler offset is compared to an offset threshold. In other words, it is determined whether the vehicle and the cyclist may be in a situation that they are closer to each other than the minimal traveler offset. Consequently, the interference risk is determined in a simple and reliable manner.

In an example, the minimal traveler offset is a minimal geometric distance between the vehicle and the cyclist and the offset threshold is a minimal traveler distance threshold. The minimal traveler distance threshold may also be described as a safety distance. Thus, a risk of interference is present if the minimal geometric distance between the vehicle and the cyclist, which are traveling along the vehicle path and the cyclist path respectively, is inferior to the minimal traveler distance threshold, i.e. the safety distance. This is a reliable and computationally efficient manner for determining the interference risk. The determination may be based on the at least one image provided by the environment detection unit of the vehicle.

In another example, the minimal traveler offset is a time span between the vehicle travelling over the location of interference of the vehicle path and the cyclist travelling over the location of interference of the cyclist path and the offset threshold is a minimal time span threshold. In this context, the minimal time span threshold may also be called a safety time. This means that if a sufficient amount of time passes between the vehicle traveling over the location of interference of the vehicle path and the cyclist traveling over the location of interference of the cyclist path, no risk of interference is determined. In the opposite case, i.e. if the time span is inferior to the minimal time span threshold, the vehicle and the cyclist are traveling over the respective location of interference with a very short time distance. In this case, a risk of interference is present. From the perspective of the vehicle which may be executing the method according to the present disclosure, the time span between the vehicle traveling over the location of interference of the vehicle path and the cyclist traveling over the location of interference of the cyclist path may be described as a time to cross or time to pass. If the cyclist has a sufficient time to pass, no risk of interference is determined. This is a reliable and computationally efficient manner for determining the interference risk. The determination may be based on a set of images provided by the environment detection unit of the vehicle.

In an example, determining an interference risk comprises determining or receiving an information describing at least one of:
- a current cyclist speed,
- a current vehicle speed,
- a current distance between the vehicle and the cyclist,
- a current distance between the vehicle and the location of interference of the vehicle path,
- a current distance between the cyclist and the location of interference of the cyclist path,
- a current time estimate describing a time needed by the vehicle to reach the location of interference of the vehicle path, and
- a current time estimate describing at time needed by the cyclist to reach the location of interference of the cyclist path.

All of the above indicators may be determined based on a set of images provided by the environment detection unit of the vehicle. Consequently, the interference risk may be determined in a reliable and computationally efficient manner. This is especially the case for the above-mentioned minimal geometric distance between the vehicle and the cyclist and the above-mentioned time span. In order to calculate this time span, based on the above indicators, a first time may be calculated which is needed by the vehicle to reach the location of interference of the vehicle path. Additionally, a second time may be calculated which is needed by the cyclist to reach the location of interference of the cyclist path. Thereafter, a time difference may be calculated.

In an example, estimating the cyclist path comprises receiving the map information from a navigation system. The navigation system is able to provide map information of high accuracy and up-to-dateness. Consequently, the cyclist path may be estimated with high reliability.

In an example, estimating the cyclist path comprises detecting a body pose of the cyclist. As has already been explained above, the body pose may be determined using known algorithms. The body pose of a cyclist provides a valuable information on a direction in which the cyclist intends to travel. Consequently, the cyclist path may be estimated with high reliability.

In an example, the body pose is an arm pose of the cyclist. Since cyclists often indicate an intention to turn by extending an arm and pointing to the intended direction of travel, the detection of an arm pose allows to reliably estimate the cyclist path. In more detail, the cyclist may extend the left arm if he or she intends to turn to the left. The cyclist may extend the right arm if he or she intends to turn to the right. If none of the arms is extended, one may infer that the cyclist intends to travel straight ahead. In this context, an arm pose of the cyclist may be determined using computer vision, especially using so-called Human Pose Estimation algorithms.

It is noted that especially the combination of detecting an arm pose of the cyclist, i.e. determining whether the cyclist intends to turn to the left, turn to the right or travel straight ahead, and the map information describing at least a part of the traffic infrastructure leads to a highly reliable and accurate estimation of the cyclist path.

In an example, triggering the reaction manoeuver comprises at least one of triggering a decelerating activity and triggering a steering activity. This means that in a case in which an interference risk has been determined, the vehicle may slow down. In this context, the vehicle may reduce its speed but remain moving or may slow down until it stops. The steering activity may for example be triggered as a part of an evasive maneuver which has the objective of avoiding interference with the cyclist. Of course, all the triggered reaction maneuvers are temporary until the cyclist is not detected any more or until the vehicle path and the cyclist path do not interfere any more. Consequently, an interference between the vehicle and the cyclist is reliably avoided.

In an example, the method additionally comprises detecting a face of the cyclist and adapting the triggered reaction manoeuver if the face of the cyclist has been detected. From the detection of the face of the cyclist, one may infer that the cyclist has seen the vehicle. Consequently, the cyclist will not be surprised by the presence of the vehicle. The triggered reaction maneuver may for example be adapted in that it may be allowed for the vehicle to come closer to the cyclist. Moreover, in a case in which the face of the cyclist has been detected, the minimal traveler distance threshold and/or the minimal time span threshold may be reduced as compared to a situation in which the face of the cyclist has not been detected.

In an example, the method further comprises triggering a warning activity of the vehicle. The warning activity may relate to a visual and/or acoustic warning. For example, the vehicle may honk or turn on the hazard lights. Consequently, the vehicle is able to draw the attention of the cyclist to the interference risk. This further improves safety.

In an example, the warning activity may be selected based on the minimal geometric distance between the vehicle and the cyclist and/or the time span between the vehicle travelling over the location of interference of the vehicle path and the cyclist travelling over the location of interference of the cyclist path as has been described above. This leads to appropriate warning activities.

In another example, the method further comprises triggering a confirmation activity of the vehicle if the cyclist has been detected. Consequently, the cyclist is in a position to know that the vehicle, especially an autonomous vehicle, has detected the cyclist. An example of a confirmation activity is blinking the headlights or temporarily turning on the hazard lights.

According to a second aspect, there is provided a data processing apparatus comprising means for carrying out the method according to the present disclosure. Consequently, a risk of interference between the vehicle and the cyclist may be determined with high reliability and, based thereon, an appropriate reaction maneuver of the vehicle may be triggered such that accidents or undesired interferences are avoided.

According to a third aspect, there is provided a vehicle comprising a data processing apparatus according to the present disclosure. Thus, such a vehicle may determine a risk of interference between the vehicle and the cyclist with high reliability and, based thereon, may perform an appropriate reaction maneuver such that accidents or undesired interferences are avoided.

According to a fourth aspect, there is provided a computer program comprising instructions which, when the program is executed by a computer, cause the computer to carry out the method of the present disclosure. Thus, a risk of interference between the vehicle and the cyclist may be determined with high reliability and, based thereon, an appropriate reaction maneuver of the vehicle may be triggered such that accidents or undesired interferences are avoided.

According to a fifth aspect, there is provided a computer-readable storage medium comprising instructions which, when executed by a computer, cause the computer to carry out the method of the present disclosure. Consequently, a risk of interference between the vehicle and the cyclist may be determined with high reliability and, based thereon, an appropriate reaction maneuver of the vehicle may be triggered such that accidents or undesired interferences are avoided.

The method of the present disclosure may be at least partly computer-implemented, and may be implemented in software or in hardware, or in software and hardware. Further, the method may be carried out by computer program instructions running on means that provide data processing functions. The data processing means may be a suitable computing means, such as an electronic control module etc., which may also be a distributed computer system. The data processing means or the computer, respectively, may comprise one or more of a processor, a memory, a data interface, or the like.

It should be noted that the above examples may be combined with each other irrespective of the aspect involved.

These and other aspects of the present disclosure will become apparent from and elucidated with reference to the examples described hereinafter.

Examples of the disclosure will be described in the following with reference to the following drawings.
- Figure 1: shows a vehicle according to the present disclosure comprising a data processing apparatus according to the present disclosure, a computer-readable storage medium according to the present disclosure and a computer program according to the present disclosure, wherein the data processing apparatus comprises means for carrying out a method according to the present disclosure and the computer-readable storage medium and the computer program comprise instructions which cause a computer to carry out the method of the present disclosure,
- Figure 2: shows a first application scenario of the method of the present disclosure,
- Figure 3: shows a second application scenario of the method of the present disclosure,
- Figure 4: shows a third application scenario of the method of the present disclosure,
- Figure 5: shows the third application scenario in a different representation, and
- Figure 6: shows a fourth application scenario of the method of the present disclosure in a representation corresponding to the representation of Figure 5.

The Figures are merely schematic representations and serve only to illustrate examples of the disclosure. Identical or equivalent elements are in principle provided with the same reference signs.

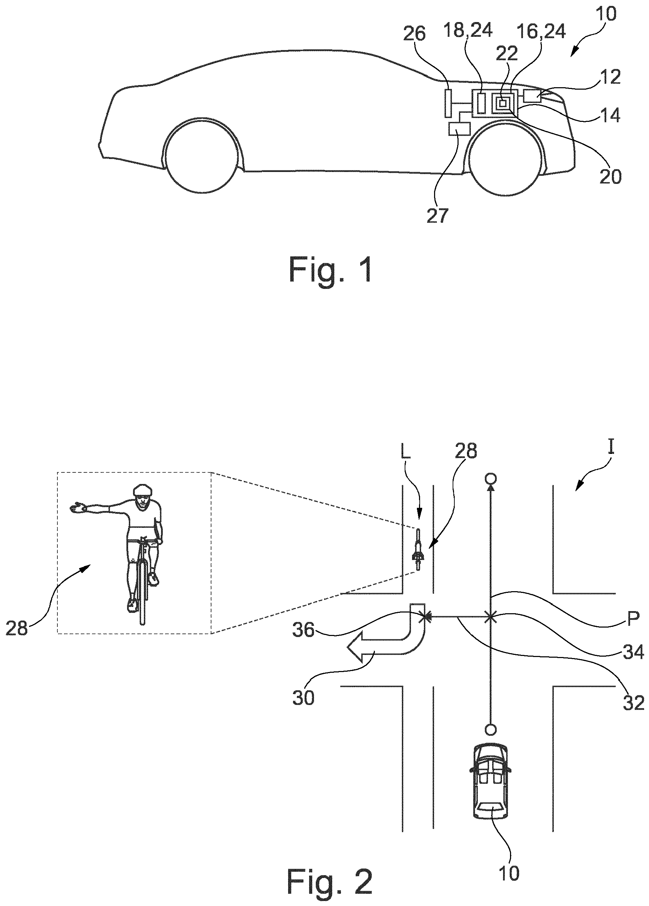

Figure 1 shows a vehicle 10 which is a fully autonomous vehicle in the present example.

The vehicle 10 comprises an environment detection unit 12 which is represented as a camera unit in Figure 1. It is noted that the camera unit as shown in Figure 1 is representative of a system which may comprise two or more camera units or other suitable sensors for environment detection facing in different directions.

The vehicle 10 also comprises a data processing apparatus 14 being communicatively connected to the environment detection unit 12.

The data processing apparatus 14 comprises a data storage unit 16 and a data processing unit 18.

The data storage unit 16 comprises a computer-readable storage medium 20.

On the computer-readable storage medium 20 there is provided a computer program 22.

The computer-readable storage medium 20 and the computer program 22 comprise instructions which, when executed by the data processing unit 18 or, more generally, a computer, cause the data processing unit 18 or the computer to carry out a method for controlling the vehicle 10.

Consequently, the data storage unit 16 and the data processing unit 18 may also be designated as means 24 for carrying out the method for controlling the vehicle 10.

Since the vehicle 10 is a fully autonomous vehicle, it also comprises a path control unit 26 which is communicatively connected to the data processing apparatus 14. The path control unit 26 is configured to control a motion of the vehicle 10 along a path. It is noted that the path control unit 26 is represented separately from the data processing apparatus 14 for the ease of explanation only. The data processing apparatus 14 may as well form part of the path control unit 26.

The vehicle 10 additionally comprises a navigation system 27 which is communicatively connected to the data processing apparatus 14. It is noted that the navigation system 27 is represented separately from the data processing apparatus 14 and the path control unit 26 for the ease of explanation only. The navigation system 27 may as well form part of one of the data processing apparatus 14 and the path control unit 26.

Figures 2 to 6 show different application scenarios of the vehicle 10 and especially the method for controlling the vehicle 10. In all of these application scenarios, the vehicle 10 is traveling along a known vehicle path P within a traffic infrastructure I. The vehicle path P has for example been determined by the path control unit 26.

The traffic infrastructure I comprises a network of roads and pathways which can be traveled by the vehicle 10. For illustrative purposes, only a small portion of such a network is represented in the Figures.

Furthermore, the vehicle 10 shares the traffic infrastructure I with a cyclist 28. This means that the same roads and pathways of the traffic infrastructure I are used by both the vehicle 10 and the cyclist 28.

In a first step S1 of the method for controlling the vehicle 10, the cyclist 28 is detected using the environment detection unit 12. In the example shown in the Figures, a stream of images is captured by the environment detection unit 12. The cyclist 28 is represented in the images of the stream of images. Using a recognition method, the representation of the cyclist 28 may be recognized within the images. Consequently, the cyclist 28 is detected.

Thereafter, in a second step S2, a location L of the cyclist 28 is determined. This is done based on the images captured by the environment detection unit 12.

Since a position and orientation of the environment detection unit 12 in the vehicle 10 is known, the location L of the cyclist 28 may be determined with respect to the vehicle 10 by analyzing the size and position of the representation of the cyclist 28 in the images.

Subsequently, in a third step S3, a cyclist path 30 is estimated. The cyclist 28 is expected to be traveling along the cyclist path 30.

The cyclist path 30 is estimated based on a body pose of the cyclist 28 and a map information.

The map information describes at least a part of the traffic infrastructure I. In the present examples, the map information is received from the navigation system 27. In simplified words, the map information describes the roads and pathways that are available for being traveled by the cyclist 28.

In the present examples, the body pose of the cyclist 28 relates to an arm pose of the cyclist 28.

The body pose, more precisely the arm pose, is determined based on the images being captured by the environment detection unit 12.

Using algorithms that are known as such, representations of the arms of the cyclist 28 may be detected in the images and it may be determined whether the cyclist 28 extends at least one arm to the left, to the right or whether no arm is extended.

When combining the information relating to the body pose of the cyclist 28 and the map information, the cyclist path 30 may be determined with high reliability.

In the application scenario of Figure 2, the cyclist path 30 comprises a turn to the right from the perspective of the cyclist 28, since the cyclist 28 has been found to extend his or her right arm and the map information relates to a street crossing ahead of the cyclist 28.

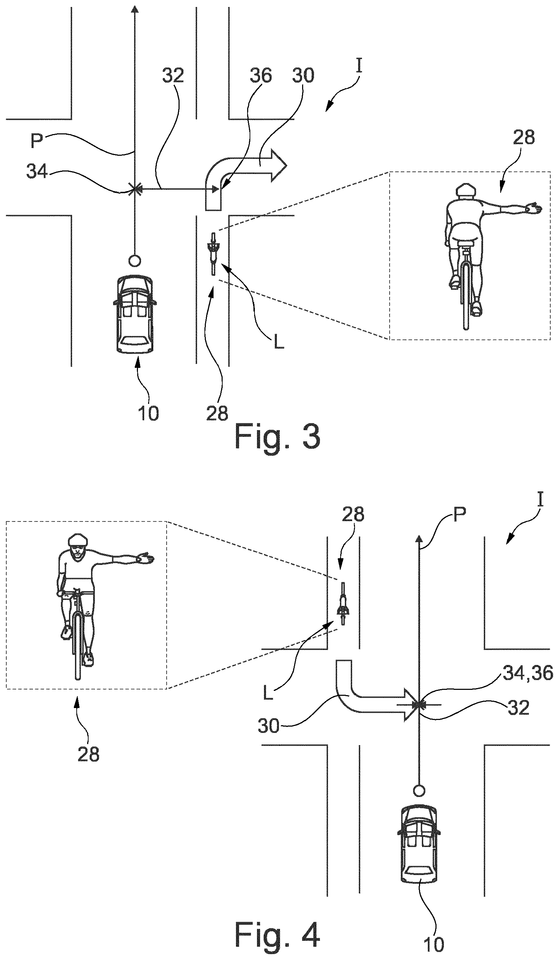

In the application scenario of Figure 3, the cyclist path 30 comprises a turn to the right from the perspective of the cyclist 28, since the cyclist 28 has been found to extend his or her right arm and the map information relates to a street crossing ahead of the cyclist 28.

In the application scenario of Figure 4, the cyclist path 30 comprises a turn to the left from the perspective of the cyclist 28, since the cyclist 28 has been found to extend his or her left arm to the left and the map information relates to a street crossing ahead of the cyclist 28.

It is noted that in the application scenarios of Figures 2 and 4, the cyclist 28 and the vehicle 10 are traveling towards each other, wherein in the application scenario of Figure 3 the vehicle 10 and the cyclist 28 of traveling into the same direction.

In a fourth step S4, the estimated cyclist path 30 and the known vehicle path P are used to determine whether the vehicle path P and the cyclist path 30 interfere with one another.

To this end, a minimal path distance 32 between the vehicle path P and the cyclist path 30 is determined and compared to a minimal path distance threshold.

In the application scenario of Figure 2 and the application scenario of Figure 3 the minimal path distance 32 has been found to exceed the minimal path distance threshold. In these cases, the method is abandoned since the vehicle path P and the cyclist path 30 do not interfere with one another.

In the application scenario of Figure 4, the vehicle path P and the cyclist path 30 cross each other. Thus, the minimal path distance is zero which is inferior to the minimal path distance threshold.

Since it is found that the vehicle path P and the cyclist paths 30 interfere with one another, also a location 34, 36 of interference may be determined for each of the vehicle path P and the cyclist path 30. The locations 34, 36 of interference are the locations 34, 36 of the respective vehicle path P or cyclist path 30 which limit the minimal path distance between the vehicle path P and the cyclist path 30. In the special case in which the vehicle path P and the cyclist path 30 cross each other, the locations 34, 36 of interference of the vehicle path P and the cyclist path 30 are identical.

Consequently, a fifth step S5 is performed. In the fifth step S5 an interference risk is determined. The interference risk describes whether the vehicle 10 and the cyclist 28 risk to interfere with one another at the respective location 34, 36 of interference. Obviously, step S5 is only performed if in step S4 an interference of the vehicle path P and the cyclist path 30 has been determined.

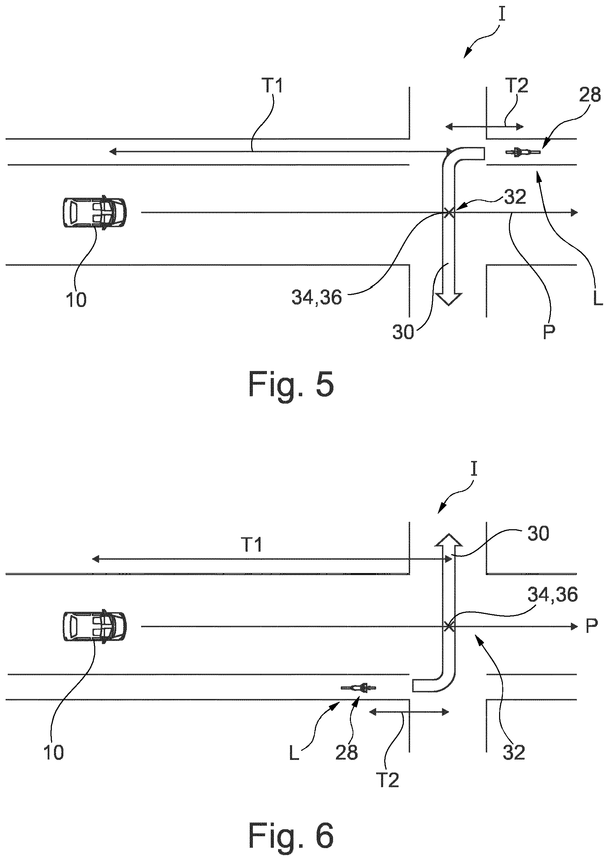

This will be explained in more detail with reference to Figure 5 which shows the same application scenario as Figure 4.

Determining the interference risk comprises determining a minimal traveler offset between the vehicle 10 and the cyclist 28 occurring while the vehicle 10 is traveling along the vehicle path P and the cyclist 28 is traveling along the cyclist path 30.

The minimal traveler offset is compared to an offset threshold.

In the example of Figures 4 and 5, the minimal traveler offset is a time span T between the vehicle 10 travelling over the location 34 of interference of the vehicle path P and the cyclist 28 travelling over the location 36 of interference of the cyclist path 30. Consequently, the offset threshold is a minimal time span threshold.

In order to determine the time span T, the current vehicle speed is received from the path control unit 26. A current cyclist speed is determined based on the captured images. As has already been explained above, based on the captured images, a location L of the cyclist 28 may be determined. The cyclist speed may be derived from a comparison of two locations L as shown in captured images and a time span lying between capturing these two images.

Moreover, using the location L of the cyclist 28 as described above, the map information received from the navigation system 27 and the location 36 of interference of the cyclist path 30, a current distance between the cyclist 28 and the location 36 of interference of the cyclist path 30 may be determined.

In the same manner, using a known location of the vehicle 10 which may also be provided by the navigation system 27, the map information and the location 34 of interference of the vehicle path P, a current distance between the vehicle 10 and the location 34 of interference of the vehicle path P may be determined.

Using this distance information in combination with the speed information, a current time estimate T1 describing a time needed by the vehicle 10 to reach the location 34 of interference of the vehicle path P and a current time estimate T2 describing at time needed by the cyclist 28 to reach the location 36 of interference of the cyclist path 30 may be calculated.

The time span T may then be determined as the difference between the time estimate T1 and the time estimate T2.

Thus, the time span T describes a time difference between the vehicle 10 traveling over the location 34 of interference of the vehicle path P and the cyclist 28 traveling over the location 36 of interference of the cyclist path 30.

From the perspective of the vehicle 10, the time span T may be designated as a time to pass for the cyclist 28.

The time span T is then compared to the minimal time span threshold. The minimal time span threshold is for example 10 seconds. This means that, if within 10 seconds or less, the vehicle 10 travels over the location 34 of interference of the vehicle path P and the cyclist 28 travels over the location 36 of interference of the cyclist path 30, a risk of interference is determined. Otherwise, no risk of interference is determined.

In the present example, based on the above determined locations also a current distance between the vehicle 10 and the cyclist 28 is determined. This is a safety measure ensuring that the vehicle 10 and the cyclist 28 are always at a minimal safety distance.

It is noted that as an alternative to the calculation of the time span T, the fifth step S5 may also be based on the calculation of a minimal traveler offset which is a minimal geometric distance between the vehicle 10 and the cyclist 28. Thus, a minimal geometric distance between the vehicle 10 and the cyclist 28 is determined.

If the minimal geometric distance falls below a minimal geometric distance threshold, an interference risk is determined.

Figure 6 shows another application scenario where, in contrast to the application scenario of Figure 5, the cyclist 28 and the vehicle 10 are traveling into the same direction.

As before, the time span T is determined by determining the time estimates T1 and T2 as has been explained above.

Consequently, the method for controlling the vehicle 10 may be used independent from the fact whether the vehicle 10 and the cyclist 28 travel towards each other or into the same direction.

Based on the detected interference risk, a reaction maneuver of the vehicle 10 is triggered in a sixth step S6.

The reaction maneuver may comprise at least one of triggering a deceleration activity and a steering activity of the vehicle 10.

The vehicle 10 may for example stop or reduce its traveling speed. Alternatively, the vehicle 10 may change lanes.

It is noted that the reaction maneuver may also be dependent on a current traveling speed of the vehicle 10.

If an interference risk has been determined, also a warning activity of the vehicle 10 may be triggered. The warning activity may comprise honking, turning on the hazard lights or another suitable warning activity is which has the potential to make the cyclist 28 notice the vehicle 10.

A warning activity of increased intensity may be triggered if it is found that a collision between the vehicle 10 and the cyclist 28 is inevitable. The inevitability may be determined based on the current distance between the vehicle 10 and the cyclist 28.

Other variations to the disclosed examples can be understood and effected by those skilled in the art in practicing the claimed disclosure, from the study of the drawings, the disclosure, and the appended claims. In the claims the word "comprising" does not exclude other elements or steps and the indefinite article "a" or "an" does not exclude a plurality. A single processor or other unit may fulfill the functions of several items or steps recited in the claims. The mere fact that certain measures are recited in mutually different dependent claims does not indicate that a combination of these measures cannot be used to advantage. A computer program may be stored/distributed on a suitable medium such as an optical storage medium or a solid-state medium supplied together with or as part of other hardware, but may also be distributed in other forms, such as via the Internet or other wired or wireless telecommunication systems. Any reference signs in the claims should not be construed as limiting the scope of the claims.

### LIST OF REFERENCE SIGNS

- 10: vehicle
- 12: environment detection unit
- 14: data processing apparatus
- 16: data storage unit
- 18: data processing unit
- 20: computer-readable storage medium
- 22: computer program
- 24: means for carrying out a method for controlling the vehicle
- 26: path control unit
- 27: navigation system
- 28: cyclist
- 30: cyclist path
- 32: minimal path distance
- 34: location of interference of the vehicle path
- 36: location of interference of the cyclist path

- P: vehicle path
- L: location of the cyclist
- I: traffic infrastructure
- S1: first step
- S2: second step
- S3: third step
- S4: fourth step
- S5: fifth step
- S6: sixth step

## Claims

1. A method for controlling a vehicle (10), wherein the vehicle (10) is travelling along a known vehicle path (P) and shares a traffic infrastructure (I) with a cyclist (28), the method comprising:
- detecting the cyclist (28) based on at least one image received from an environment detection unit (12) of the vehicle (10) (S1),
- determining a location (L) of the cyclist (28) (S2),
- estimating a cyclist path (30) along which the cyclist (28) is expected to be travelling based on a body pose of the cyclist and a map information describing at least a part of the traffic infrastructure (I) (S3),
- determining whether the vehicle path (P) and the cyclist path (30) interfere with one another and determining a location (34, 36) of interference of the vehicle path (P) and the cyclist path (30) respectively (S4) if the vehicle path (P) and the cyclist path (30) interfere with one another,
- determining an interference risk describing whether the vehicle (10) and the cyclist (28) risk to interfere with one another at the respective location (34, 36) of interference (S5), if the vehicle path (P) and the cyclist path (30) interfere with one another, and
- triggering a reaction manoeuver of the vehicle (10), if an interference risk is determined (S6).

2. The method of claim 1, wherein determining whether the vehicle path (P) and the cyclist path (30) interfere with one another comprises determining a minimal path distance (32) between the vehicle path (P) and the cyclist path (30) and comparing the minimal path distance (32) to a minimal path distance threshold.

3. The method of claim 1 or 2, wherein determining an interference risk comprises determining a minimal traveler offset between the vehicle (10) and the cyclist (28) occurring while the vehicle (10) is travelling along the vehicle path (P) and the cyclist (28) is travelling along the cyclist path (30), and comparing the minimal traveler offset to an offset threshold.

4. The method of claim 3, wherein the minimal traveler offset is a minimal geometric distance between the vehicle (10) and the cyclist (28) and the offset threshold is a minimal traveler distance threshold.

5. The method of claim 3, wherein the minimal traveler offset is a time span (T) between the vehicle (10) travelling over the location (34) of interference of the vehicle path (P) and the cyclist (28) travelling over the location (36) of interference of the cyclist path (30) and the offset threshold is a minimal time span threshold.

6. The method of any one of the preceding claims, wherein determining an interference risk comprises determining or receiving an information describing at least one of:
- a current cyclist speed,
- a current vehicle speed,
- a current distance between the vehicle (10) and the cyclist (28),
- a current distance between the vehicle (10) and the location (34) of interference of the vehicle path (P),
- a current distance between the cyclist (28) and the location (36) of interference of the cyclist path (30),
- a current time estimate describing a time needed by the vehicle (10) to reach the location (34) of interference of the vehicle path (P), and
- a current time estimate describing at time needed by the cyclist (28) to reach the location (36) of interference of the cyclist path (30).

7. The method of any one of the preceding claims, wherein estimating the cyclist path (30) comprises receiving the map information from a navigation system (27).

8. The method of any one of the preceding claims, wherein estimating the cyclist path (30) comprises detecting a body pose of the cyclist (28).

9. The method of claim 8, wherein the body pose is an arm pose of the cyclist (28).

10. The method of any one of the preceding claims, wherein triggering the reaction manoeuver comprises at least one of triggering a decelerating activity and triggering a steering activity.

11. The method of any one of the preceding claims, further comprising triggering a warning activity of the vehicle (10).

12. A data processing apparatus (14) comprising means (24) for carrying out the method of any one of the preceding claims.

13. A vehicle (10) comprising a data processing apparatus (14) according to claim 12.

14. A computer program (22) comprising instructions which, when the computer program (22) is executed by a computer, cause the computer to carry out the method of claims 1 to 11.

15. A computer-readable storage medium (20) comprising instructions which, when executed by a computer, cause the computer to carry out the method of claims 1 to 11.

## Amended claims

### Amended claims in accordance with Rule 137(2) EPC.

1. A method for controlling a vehicle (10), wherein the vehicle (10) is travelling along a known vehicle path (P) and shares a traffic infrastructure (I) with a cyclist (28), the method comprising:
- detecting the cyclist (28) based on at least one image received from an environment detection unit (12) of the vehicle (10) (S1),
- determining a location (L) of the cyclist (28) (S2),
- estimating a cyclist path (30) along which the cyclist (28) is expected to be travelling based on a body pose of the cyclist and a map information describing at least a part of the traffic infrastructure (I) (S3),
- determining whether the vehicle path (P) and the cyclist path (30) interfere with one another and determining a location (34, 36) of interference of the vehicle path (P) and the cyclist path (30) respectively (S4) if the vehicle path (P) and the cyclist path (30) interfere with one another,
- determining an interference risk describing whether the vehicle (10) and the cyclist (28) risk to interfere with one another at the respective location (34, 36) of interference (S5), if the vehicle path (P) and the cyclist path (30) interfere with one another, and
- triggering a reaction manoeuver of the vehicle (10), if an interference risk is determined (S6) or, otherwise, abandoning the method.

2. The method of claim 1, wherein determining whether the vehicle path (P) and the cyclist path (30) interfere with one another comprises determining a minimal path distance (32) between the vehicle path (P) and the cyclist path (30) and comparing the minimal path distance (32) to a minimal path distance threshold.

3. The method of claim 1 or 2, wherein determining an interference risk comprises determining a minimal traveler offset between the vehicle (10) and the cyclist (28) occurring while the vehicle (10) is travelling along the vehicle path (P) and the cyclist (28) is travelling along the cyclist path (30), and comparing the minimal traveler offset to an offset threshold wherein the minimal traveler offset is a minimal geometric distance or a time span (T) between the vehicle (10) and the cyclist (28).

4. The method of claim 3, wherein the minimal traveler offset is a minimal geometric distance between the vehicle (10) and the cyclist (28) and the offset threshold is a minimal traveler distance threshold.

5. The method of claim 3, wherein the minimal traveler offset is a time span (T) between the vehicle (10) travelling over the location (34) of interference of the vehicle path (P) and the cyclist (28) travelling over the location (36) of interference of the cyclist path (30) and the offset threshold is a minimal time span threshold.

6. The method of any one of the preceding claims, wherein determining an interference risk comprises determining or receiving an information describing at least one of
- a current cyclist speed,
- a current vehicle speed,
- a current distance between the vehicle (10) and the cyclist (28),
- a current distance between the vehicle (10) and the location (34) of interference of the vehicle path (P),
- a current distance between the cyclist (28) and the location (36) of interference of the cyclist path (30),
- a current time estimate describing a time needed by the vehicle (10) to reach the location (34) of interference of the vehicle path (P), and
- a current time estimate describing at time needed by the cyclist (28) to reach the location (36) of interference of the cyclist path (30).

7. The method of any one of the preceding claims, wherein estimating the cyclist path (30) comprises receiving the map information from a navigation system (27).

8. The method of any one of the preceding claims, wherein estimating the cyclist path (30) comprises detecting a body pose of the cyclist (28).

9. The method of claim 8, wherein the body pose is an arm pose of the cyclist (28).

10. The method of any one of the preceding claims, wherein triggering the reaction manoeuver comprises at least one of triggering a decelerating activity and triggering a steering activity.

11. The method of any one of the preceding claims, further comprising triggering a warning activity of the vehicle (10).

12. A data processing apparatus (14) comprising means (24) for carrying out the method of any one of the preceding claims.

13. A vehicle (10) comprising a data processing apparatus (14) according to claim 12.

14. A computer program (22) comprising instructions which, when the computer program (22) is executed by a computer, cause the computer to carry out the method of claims 1 to 11.

15. A computer-readable storage medium (20) comprising instructions which, when executed by a computer, cause the computer to carry out the method of claims 1 to 11.
